# EUROPEAN PATENT SPECIFICATION

(11) **EP 3 348 865 B1**
(45) Date of publication and mention of the grant of the patent: **26.02.2020**
(21) Application number: 18150135.4
(22) Date of filing: 03.01.2018
(51) Int. Cl.: F16H 25/22, B62D 5/04

(54) **STEERING SYSTEM**
LENKSYSTEM
SYSTÈME DE DIRECTION

(30) Priority: 16.01.2017 IT 201700004002
(43) Date of publication of application: 18.07.2018
(60) Divisional application: 20150687.0
(73) Proprietor: OGNIBENE POWER S.P.A., 42124 Reggio Emilia (IT)
(72) Inventor: OGNIBENE, Claudio, 42121 REGGIO EMILIA (IT)
(74) Representative: Corradini, Corrado

(56) References cited:
- EP-A1- 2 840 283
- DE-A1- 4 138 884
- GB-A- 2 060 126
- NL-C- 54 350

## Description

### TECHNICAL FIELD

The present invention relates to a steering system, in particular a steering system comprising an electric linear actuator equipped with a recirculating ball screw.

### PRIOR ART

Generally, steering systems comprise at least a pair of lever mechanisms connected to the wheels of the vehicle on which the steering system itself is mounted, an electric linear actuator equipped with a stem the extremities of which are associated with said lever mechanisms, and a control mechanism adapted to govern the actuator.

By operating on the control mechanism, the actuator stem can be translated towards one or the other wheel, tilting the wheels with respect to the direction of forward movement, so as to perform vehicle steering.

One known solution provides for the operation in translation of the stem to be performed by means of a recirculating ball screw system.

In particular, an outer thread (or more generally an outer helical groove) obtained on the stem lateral surface is coupled, by means of the interposition of balls, to a nut screw (meaning a body equipped with an inner thread).

The operation of the stem is performed by making the nut screw rotate by means of an electric motor: the stem, not being able to rotate around itself because its extremities are hinged to the lever mechanisms, translates along the axis of rotation of the nut screw.

A linear actuator of this kind is disclosed in the German patent application DE-A-41 38 884, which document discloses the features of the preamble of claim 1.

A first drawback of the known solution is that the realization of the outer thread on the stem causes a reduction of the resistant section of the stem, which results in a reduction of the structural static resistance and resistance to fatigue. Furthermore, the stem must be made of a material elastic enough to absorb the stresses coming from the lever mechanisms (e.g., caused by the unevenness of the terrain over which the vehicle moves), while the thread better withstands the wear caused by the rolling of the balls if it is made of a material with a high degree of hardness.

Adding that the stem must be made in a single body to ensure adequate structural static resistance and resistance to fatigue, it clearly appears how it is generally complicated to cater to all the aforementioned needs at the same time. One object of the present invention is to overcome these drawbacks of prior art, in the context of a simple, rational and low-cost solution.

Such objects are achieved by the characteristics of the invention shown in the in-dependent claim.

The dependent claims describe preferred and/or particularly advantageous aspects of the invention.

### DISCLOSURE OF THE INVENTION

The invention makes available a steering system according to claim 1.

Thanks to this solution, the mechanical static resistance and resistance to fatigue of the stem is not weakened by the thread and it is therefore possible to make a compact, lightweight and reasonably priced stem. Furthermore, the stem and the second cylindrical body can be made of different materials and/or materials characterized by different treatments, thus improving the effectiveness and duration of the electric linear actuator. For example, the second cylindrical body can be made of a material and/or receive surface treatments adapted to improve the resistance to wear due to the dragging of the balls, the stem can be made of a material and/or receive surface treatments to resist both the stresses transmitted by the wheels of the vehicle and the wear of external agents which tend to consume the portions of the stem which protrude outwardly from the casing.

According to one aspect of the invention, the casing can be closed at one extremity by a head having an opening wherein it is inserted in a sliding way and from which the stem protrudes, and the diameter of the opening is smaller than the outer diameter of the second cylindrical body.

This way, the second cylindrical body acts as an end-of-stroke element for the stem, thereby preventing both excessive steering and the consequent coming out of the balls from their housing, a drawback which would necessitate an expensive maintenance job to restore the functionality of the electric actuator. According to another aspect of the invention, the helical groove has an inlet and an outlet and extends around the sliding axis according to an angle which approximates by defect an angle of 360°, and wherein the recirculating means comprise a connection groove which joins together the inlet and the outlet of the helical groove closing the helical groove itself in a loop around the sliding axis.

Thanks to this solution, the recirculating means are easy to make and ensure a fluid recirculation of the balls.

According to an alternative aspect of the invention, the helical groove can be extended around the sliding axis according to an angle greater than 360°, forming an outer thread.

According to a further aspect of the invention the recirculating means comprise a deflector which is inserted in a suitable seat obtained in the second cylindrical body and is configured to put in communication with each other an initial portion and an end portion of a convolution of the outer helical groove.

This way, a closed loop is made available wherein the balls can recirculate, made in a simple and inexpensive outer thread.

According to another aspect of the invention, the second cylindrical body can comprise a central body on which is obtained the helical groove and a pair of extremal bodies fixed to the central body, and wherein the recirculating means can comprise a pair of inner helical channels, each obtained in a respective extremal body and communicating at one extremity with the helical groove, and a through channel obtained in the central body and adapted to put in communication the inner helical channels.

Thanks to such solution, the risk is reduced of the balls jamming or slowing down due to foreign bodies, because the ball recirculation area is hard for such foreign bodies to access.

Advantageously, the surfaces of the through channel can be defined by a groove obtained on a portion of the central body in contact with the stem and by a portion of the stem lateral surface.

This way the assembly of the actuator is simple and inexpensive. Furthermore such solution permits using a simple stem, e.g., having a hardening surface treatment, on which no machining operations have to be performed with removal of material to allow fixing to the second cylindrical body.

According to a further aspect of the invention, the actuator comprises a reference pin, which has one extremity housed in a suitable seat obtained in the stem and another extremity housed in a suitable seat obtained in the second cylindrical body.

Thanks to such solution, the helical groove can be orientated, i.e., placed in phase, with respect to the stem, and therefore to the inner thread, in a simple, inexpensive and precise way.

According to the invention, the second cylindrical body comprises an axial slit, which lies on a plane containing a symmetry axis of the second cylindrical body and extends from a portion of the second cylindrical body turned towards the first cylindrical body to a portion of the second cylindrical body turned towards the stem.

### BRIEF DESCRIPTION OF THE DRAWINGS

Further characteristics and advantages of the invention will appear evident by reading the following description provided by way of example, but not exhaustive, with the aid of figures on the attached tables.
Figure 1 is a perspective view of an actuator according to the invention.

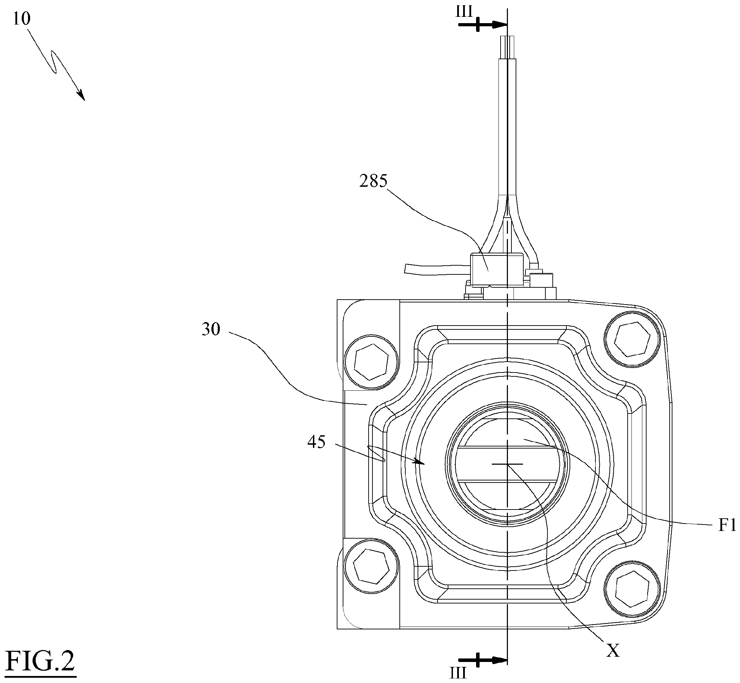

Figure 2 is a side view of the actuator of figure 1.
Figure 3 is a section view of the actuator of figure 2 according to the plane III-III Figure 4 is a section view of the actuator of figure 3 in a different operating position.
Figure 5 is a section view of a different embodiment of a stem of the actuator.
Figure 6 is a front view, with a sectioned portion, of a
second cylindrical body according to the invention and of recirculating means of the actuator.
Figure 7 is a perspective view with enlargement of the second cylindrical body of figure 6.
Figure 8 is a front view of a second cylindrical body and of the recirculating means of the actuator.
Figure 9 is a section view of the device of figure 8 according to the plane IX-IX.
Figure 10 is a front view, with a sectioned portion, of a
second cylindrical body and of the recirculating means of the actuator.
Figure 11 is an exploded view of the second cylindrical body of figure 10.
Figure 12 is a diagram of a steering system according to the invention.

### BEST WAY OF CARRYING OUT THE INVENTION

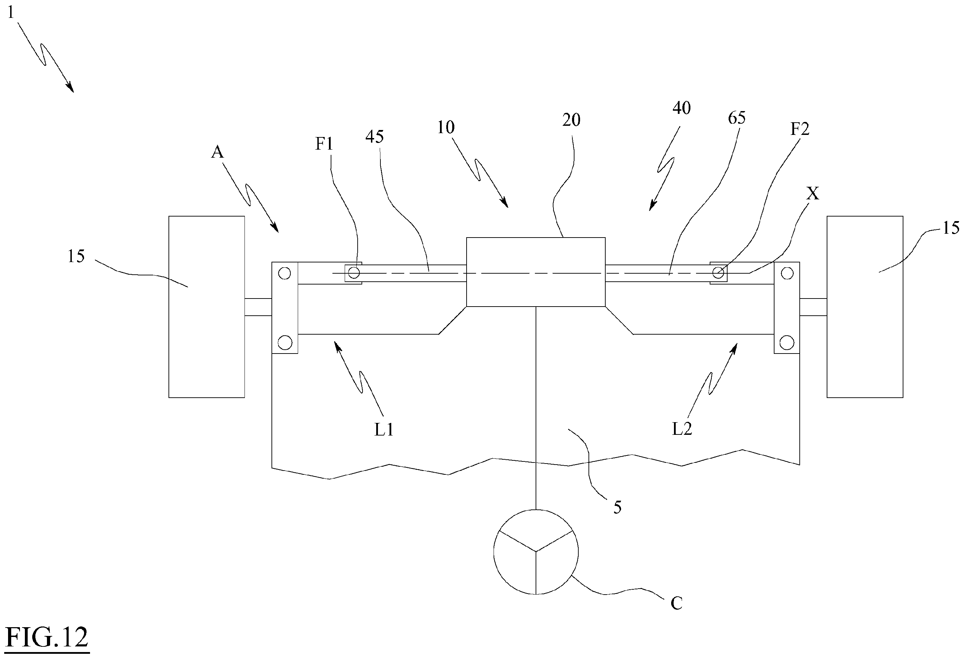

With particular reference to figure 12, globally indicated by 1 is a steering system for a vehicle equipped with a pair of steering wheels 15.

The steering system comprises a first steering lever mechanism L1 connected to a wheel 15, a second steering lever mechanism L2 connected to another wheel 15, an electric linear actuator 10 adapted to operate one of the two steering lever mechanisms L1,L2 and a control mechanism C adapted to govern the actuator 10.

Alternatively, the steering system can comprise an actuator 10 for each steering lever mechanism L1, L2.

The actuator 10 comprises a casing 20 having a tubular portion 25 (of elongated shape), which, for example, has a rectangular cross section and can be obtained by an aluminum extrusion.

The tubular portion 25 is intended to be fixed to a frame 5 of the vehicle.

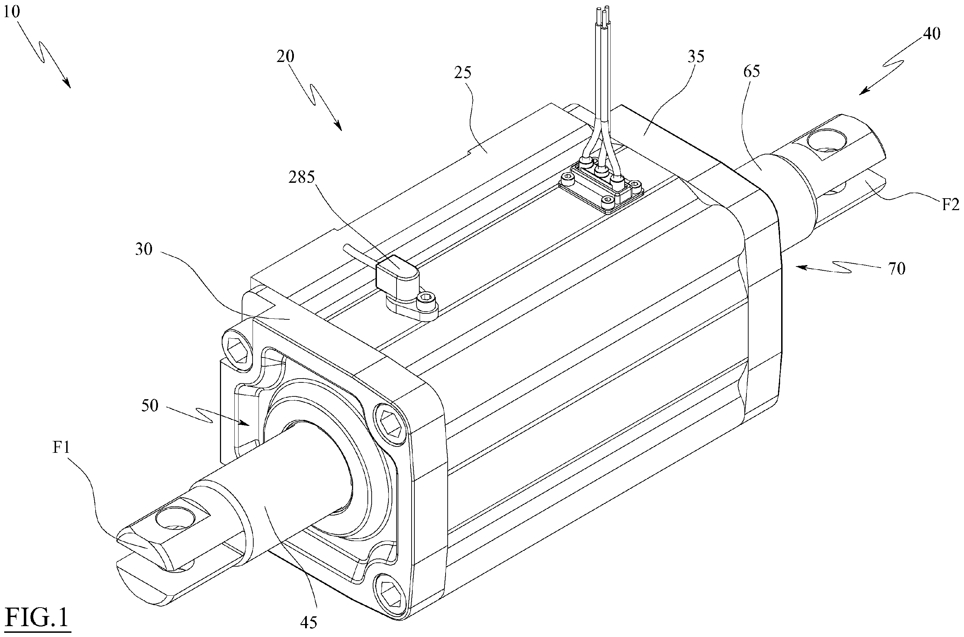

As shown in figure 1, the casing 20 also comprises a first head 30 and a second head 35 adapted to close the open extremities of the tubular portion 25. The first head 30 and the second head 35 are fixed to the tubular portion 25, e.g., by means of threaded parts.

The first head 30 and the second head 35 can be made of high-tensile steel, e.g., having a hardening surface treatment over the entire surface of the head 30,35.

The casing 20 can furthermore comprise a plurality of cooling fins (not shown in the drawings) arranged on its outer surface.

The actuator 10 comprises a stem 40 associated in a sliding way with the casing 20 according to a sliding axis X, and having at least one extremity which protrudes outwardly from said casing 20.

The sliding axis X is parallel to a longitudinal axis of the stem 40 and to a longitudinal axis of the tubular portion 25 of the casing 20.

In one embodiment, the stem 40 has a first portion 45, e.g. with cylindrical shape, which protrudes outwardly, at least in part, from the casing 20 and is inserted in a sliding way with reduced play in a cylindrical opening 50 obtained in the first head 30.

The first head 30 can comprise a bush 55 that defines the opening 50.

The bush 55 can be made of high-tensile steel having a hardening surface treat-ment, e.g., nitriding.

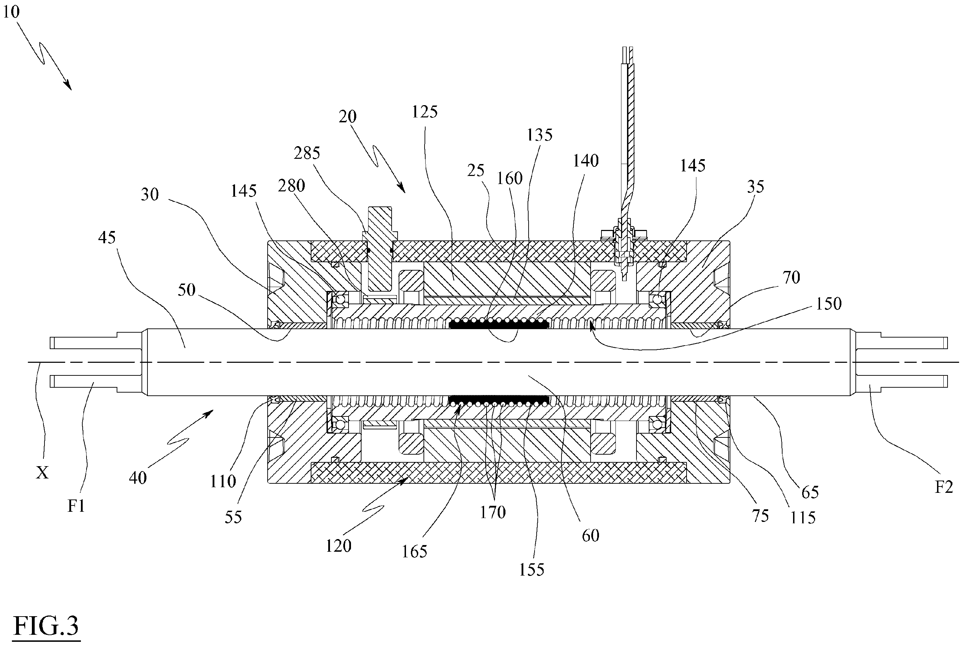

The stem 40 also comprises a second portion 60, e.g. with cylindrical shape, side by side with the first portion 45 and contained inside the casing 20 (see fig. 3).

In practice, the second portion 60 always remains inside a volume which is defined by the tubular portion 25 of the casing and is delimited in the direction of the sliding axis X by the first head 30 and by the second head 35.

I.e., the second portion 60 does not cross the first head 30 and the second head 35.

In the preferred embodiment shown in the drawings, the stem 40 has a third portion 65, e.g., of cylindrical shape, which protrudes outwardly, at least in part, from the casing 20 and is inserted in a sliding way with reduced play in a cylindrical opening 70 obtained in the second head 35.

The second head 35 can comprise a bush 75 which defines the opening 70. The bush 75 can be made of high-tensile steel having a hardening surface treat-ment, e.g., a nitriding surface treatment.

The third portion 65 is side by side with the second portion 60 from the extremity opposite the first portion 45.

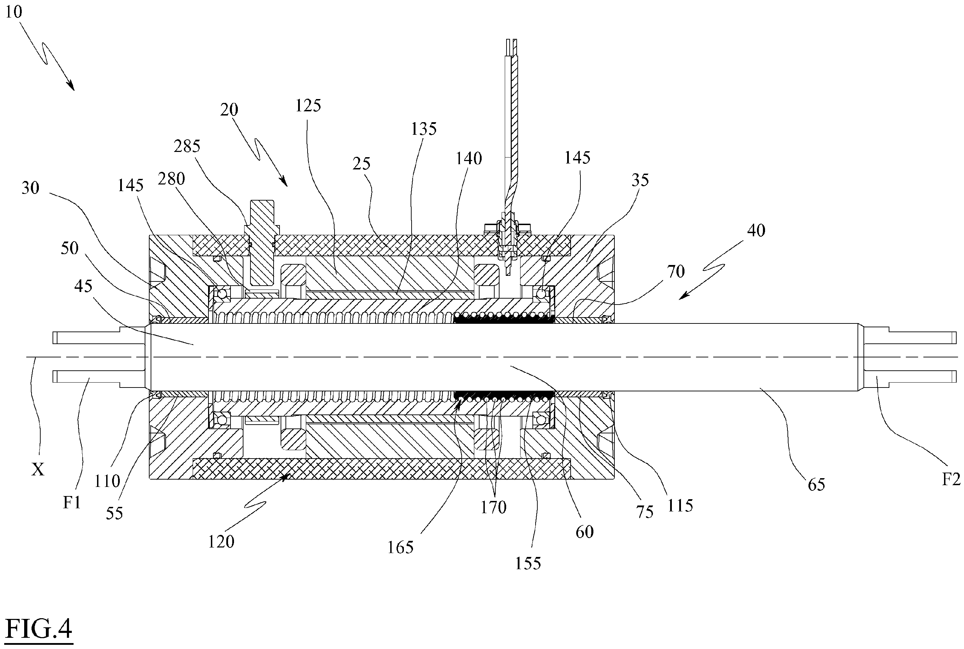

In the preferred embodiment of figures 3 and 4, the stem 40 has a circular-shaped cross section and constant along the entire axial extension of the stem itself comprised between the free extremity of the first portion 45 and the free extremity of the third portion 65.

The stem 40 also comprises connection elements with the steering lever mechanisms L1,L2 placed at the free extremities of the first portion 45 and of the third portion 65.

For example, as shown in the figures from 1 to 4, the connection elements of the stem 40 comprise a first fork element F1, placed at the extremity of the first portion 45 opposite the third portion 65 and by means of which the first portion 45 is integral (hinged) with the first steering lever mechanism L1, and a second fork element F2, placed at the extremity of the third portion 65 opposite the first portion 45 and by means of which the third portion 65 is integral (hinged) with the second steering lever mechanism L2.

Such embodiment of the connection elements can be used in the field of forklift trucks.

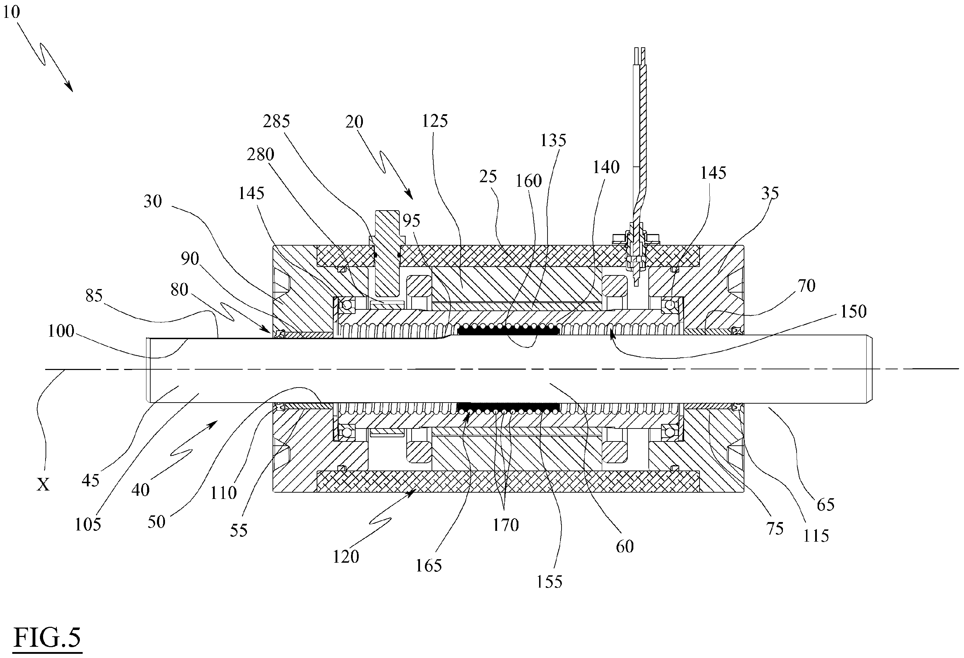

In a second embodiment shown in figure 5, the stem 40 and the opening 50 of the first head 30 are analogous or identical to those shown and described in the co-pending patent application in the name of the same Applicant registered on the same day as the patent application in question, which shall be here deemed entirely incorporated for reference.

In particular, according to such embodiment, the stem 40, i.e. the first portion 45, and the opening 50 are configured so as to define a prismatic joint 80 having a sliding axis coinciding with the sliding axis X.

This way, the stem 40 is prevented from turning with respect to the casing 20. For example, such solution permits placing a ball joint (not shown in the drawings) between the extremities of the stem 40 and the lever mechanisms L1,L2 for the installation of the actuator 10 on agricultural and/or earthmoving vehicles.

In such embodiment, the first portion 45 of the stem 40 comprises a flat surface 85, which lies on a plane parallel to the sliding axis X and is adapted to slide on a conjugated flat surface 90 obtained in the opening 50.

The flat surface 85 does not protrude with respect to the second portion 60 of the stem 40, i.e., the plane on which the flat surface 85 of the stem 40 lies intersects at two points an imaginary circumference which defines the perimeter of the cross section of the second portion 60 of the stem.

Advantageously, the flat surface 85 of the stem 40 extends along the entire axial length of the first portion 45, i.e., from the free extremity of the first portion 45 to the extremity of the first portion 45 proximal to the second portion 60. Furthermore, the flat surface 90 of the opening 50 has a width (in direction per-pendicular to the sliding axis X) substantially equal to the width (in direction per-pendicular to the sliding axis X) of the flat surface 85 of the stem.

The stem 40 also comprises a fillet surface 95, e.g., concave, adapted to fillet the flat surface 85 of the stem 40 to the second portion 60 of the stem 40, i.e., to a cylindrical surface of the second portion 60.

Such fillet surface 95, suitably shaped, can act as an end of stroke when the stem 40 moves towards the opening 50 of the first head 30.

Finally, the flat surface 85 of the stem 40 is delimited in direction transversal to the sliding axis X by a pair of beveled edges 100 (see figure 5).

In practice, the first portion 45 is delimited in radial direction by the flat surface 85, by the filleted and/or beveled edges 100 and by a portion of cylindrical surface 105 having longitudinal axis parallel to the sliding axis X and which extends circumferentially from one beveled edge 100 to the other.

The flat surface 85 of the stem 40 can for example be obtained by means of machining operations to remove shavings (milling) from a first portion 45 of cylindrical shape.

Alternatively, the prismatic joint 80 can be made by means of one or more radial protrusions, obtained and/or connected to the first portion 45 of the stem 40 and adapted to slide within respective complementary grooves obtained in the opening 50.

For example, the stem 40 can comprise a key housed in a seat obtained in the first portion 45 and adapted to slide in a complementary groove obtained in the opening 50.

A further alternative can envisage the presence of a plurality of flat surfaces 85, e.g., filleted so as to define a first portion 45 having a substantially polygonal cross section.

It cannot be ruled out that the third portion 65 of the stem 40 and the opening 70 of the second head 35 can be configured to define a further prismatic joint identical to that described above.

The stem 40 can be made of high-tensile steel, e.g. C45, and can for example receive a surface treatment.

The surface treatment can for example be a treatment with the addition of material, in particular an electrodeposition or plasma chrome-plating treatment or thermochemical treatment with subsequent oxidization.

Alternatively, the surface treatment with the addition of material can be a treatment providing the application of a ceramic layer, e.g., plasma or thermochemical coating with subsequent oxidization.

A further option envisages that the surface treatment be a thermochemical conversion treatment.

The actuator 10 comprises a first seal 110, housed in a seat obtained in a portion of the first head 30 external with respect to the opening 50, which is adapted to surround a part of the lateral surface of the first portion 45 of the stem 40.

In the first embodiment of the stem 40, the first seal 110 is of annular shape having a central hole with circular shape.

In the second embodiment of the stem 40, the first seal 110 has an annular shape, e.g., having an outer perimeter of any shape, and has a central hole with shape homologous to the shape of the opening 50.

For example, the outer perimeter of the first seal 110 is of circular shape. Preferably, the central hole of the seal 110 has a smaller area than the area of the cross section of the first portion 45 of the stem 40.

A second seal 115 is housed in a seat obtained in a portion of the second head 35 external with respect to the opening 70 and is adapted to surround a part of the lateral surface of the third portion 65 of the stem 40.

The second seal 115 has an annular shape, with a central hole of circular shape.

The seals 110,115 can for example be lip seals having an outer lip, in direct contact with the stem 40 and adapted to remove foreign bodies on the stem 40, and an inner lip in direct contact with the stem 40 and adapted to prevent lubricant liquid coming out from inside the casing 20.

The actuator 10 comprises an electric motor 120, which can be seen in figures 3- 4, housed inside the casing 20, e.g., coaxial with the stem 40.

The electric motor 120 is for example of the synchronous three-phase type. The electric motor 120 comprises a stator 125 fixed to the tubular portion 25 of the casing 20.

The stator 125 comprises, as is known to the specialist in the field, a structure having a plurality of small packaged blades around which are wound coils connected to the power supply of the electric motor 120.

The electric motor 120 comprises a rotor 135 internally concentric to the stator 125 and associated in a revolving way with the casing 20 with respect to an axis of rotation substantially parallel to the sliding axis X.

The rotor 135 has a tubular body, e.g. with a circular cross section, and a plurality of permanent magnets arranged on the outer surface, i.e., turned towards the stator 125, of the tubular body.

The permanent magnets can, for example, be fixed to the tubular body by means of glues and/or threaded connections.

The actuator 10 comprises a first axially hollow cylindrical body 140, which is integral in rotation with the rotor 135 and is coaxial with the stem 40.

The first cylindrical body 140 is fully contained inside the casing 20, and, for example, is associated in a revolving way with the casing 20 by means of a pair of bearings 145.

The bearings 145 can for example be arranged at the axial extremities of the first cylindrical body 140 and be housed in a suitable seat obtained in the respective head 30, 35.

Such first cylindrical body 140 can have an axial extension substantially equal to or less than the distance between the cylindrical openings 50,70.

The first cylindrical body 140 has an inner thread 150 (i.e., obtained on an inner surface of the first cylindrical body 140 facing onto the stem 40), which extends along the entire axial dimension of the first cylindrical body 140 itself and has a screwing-up axis coinciding with the central axis of the first cylindrical body 140.

The first cylindrical body 140 can for example be made of a steel having greater hardness than the steel the stem 40 is made of.

Preferably the cylindrical body is made of 100Cr6.

The first cylindrical body 140 can have a hardening surface treatment.

The actuator 10 comprises a second cylindrical body 155, which is fully contained inside the casing 20, has an axial cavity 160 and is coupled to the first cylindrical body 140.

In particular, the second cylindrical body 155 has an outer helical groove 165 (i.e., obtained on a surface of the second cylindrical body 155 turned towards the first cylindrical body 140) wound around the central axis of the second cylindrical body itself and is coupled to the first cylindrical body 140 by means of a plurality of balls 170 interposed between the outer helical groove 165 and the inner thread 150.

The second cylindrical body 155 is fitted on the stem 40 and is fixed thereto, i.e., the stem 40 is inserted in the axial cavity 160 of the second cylindrical body 155.

More specifically, the second cylindrical body 155 embraces and is fixed to the second portion 60 of the stem 40 and can for example have an axial extension equal to the axial extension of said second portion 60.

The second cylindrical body 155 is made in a distinct body with respect to the stem 40.

The second cylindrical body 155 has such overall dimensions in a radial direction that the head 30 defines an abutting element for said second cylindrical body 155, i.e., it has such overall dimensions as to be unable to slide with the stem 40 through the opening 50 of the first head 30.

Preferably, the second cylindrical body 155 has such overall dimensions in a radial direction that also the head 35 defines an abutting element for said second cylindrical body 155, i.e., it has such overall dimensions as to be unable to slide with the stem 40 through the opening 70 of the second head 35.

For example, in the event of the first portion 45 being cylindrical, the outer diameter (i.e., the diameter of the surface turned towards the first cylindrical body 140) of the second cylindrical body 155 is greater than the outer diameter of the cylindrical opening 50 of the first head 30.

Preferably, always in such first embodiment of the stem 40, the outer diameter of the second cylindrical body 155 is also greater than the outer diameter of the cylindrical opening 70 of the second head 35.

The actuator 10 comprises recirculating means 175 of the balls 170 obtained entirely in the second cylindrical body 155.

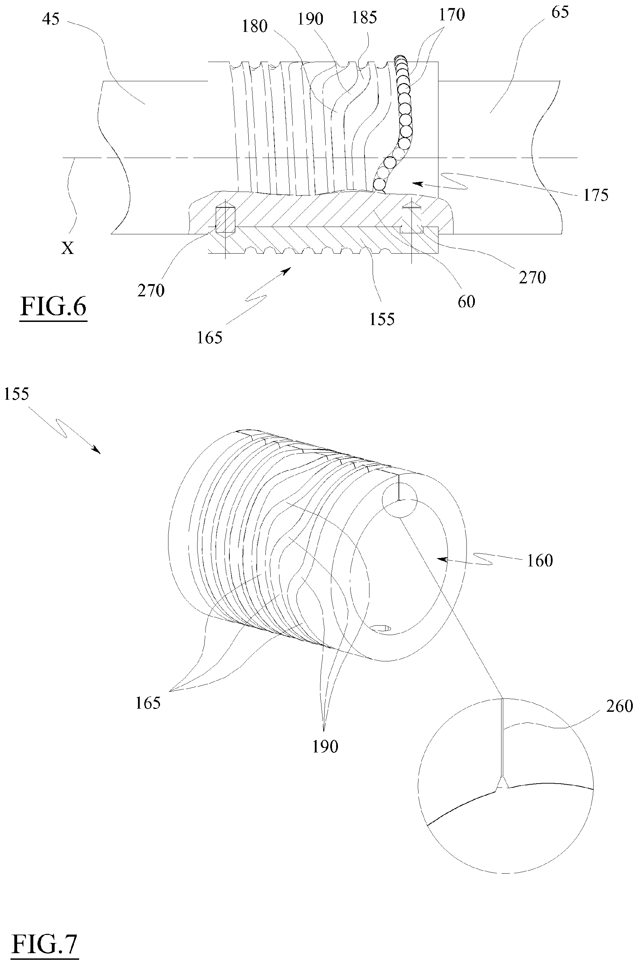

In a first embodiment of the second cylindrical body 155 and of the recirculating means 175 shown in the figures 6 and 7, the outer helical groove 165 of the second cylindrical body 155 has an inlet 180 and an outlet 185 and extends around the axis of the second cylindrical body 155 according to an angle of less than 360°.

It is pointed out that the inlet 180 and outlet 185 are reversible according to the direction of rotation of the first cylindrical body 140.

In such embodiment, the recirculating means 175 comprise a connection groove 190, obtained in the second cylindrical body 155, which joins to each other the inlet 180 and the outlet 185 of the outer helical groove 165 closing the outer helical groove itself in a loop around the axis of the second cylindrical body 155.

The connection groove 190 has a radial depth greater than the radial depth of the outer helical groove 165 and is filleted to the inlet 180 and to the outlet 185 of said outer helical groove 165.

In particular, the depth of the connection groove 190 is such that the balls, in crossing said connection groove 190, pass over the crest of a portion of the inner thread 150 facing a crest of the outer helical groove 165 between the inlet 180 and the outlet 185.

Preferably, in this first embodiment, the actuator has a plurality of outer helical grooves 165, obtained in the second cylindrical body 155, which extend around the axis of the second cylindrical body 155 according to an angle of less than 360° and which are closed in a loop by a plurality of respective connection grooves 190.

In a second and in a third embodiment of the second cylindrical body 155 and of the recirculating means 175 shown in the figures from 8 to 11, the outer helical groove 165 of the second cylindrical body 155 extends around the axis of the second cylindrical body 155 according to an angle of more than 360°. The outer helical groove 165 thus defines an outer thread coupled by means of the interposition of balls 170 to the inner thread 150 of the first cylindrical body 140.

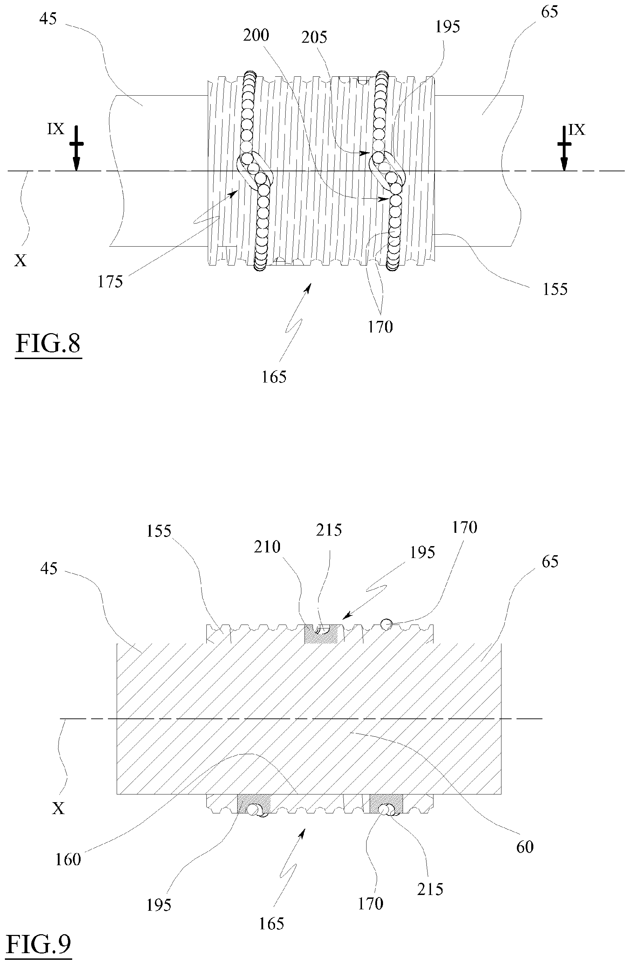

For example, in the second embodiment shown in the figures 8 and 9, the outer helical groove 165 can have an axial extension substantially equal to the axial extension of the second cylindrical body 155.

In such second embodiment, the recirculating means 175 comprise a deflector 195 which is inserted in a suitable seat obtained in the second cylindrical body 155 and is configured to put in communication with each other an initial portion 200 and an end portion 205 of a convolution of the outer helical groove 165, so as to transfer the balls 170 from said end portion 205 to said initial portion 200.

This way a closed loop can be made wherein the balls 170 can recirculate in a simple outer helical groove 165.

The deflector 195 comprises a body 210 adapted to be inserted without play, e.g., by interference, in the seat, which extends from the initial portion 200 to the end portion 205 of said convolution.

The seat of the deflector 195 can for example consist of a through slot, i.e., which passes radially through the second cylindrical body 155.

The deflector 195 has a through groove 215 obtained in the body 210 and which extends from the inlet portion 200 to the outlet portion 205 of said convolution.

The through groove 215 (in use) has a radial depth greater than the radial depth of the outer helical groove 165.

In particular, the depth of the through groove 215 is such that the balls 170, in passing through said through groove 215, pass over the crest of a portion of the inner thread 150 facing a crest of the outer helical groove 165 comprised between the two adjacent convolutions which the deflector 195 puts in communication.

Furthermore, the through groove 215 has axial extremities filleted with the profiles of the adjacent convolutions of the outer helical groove 165 which the deflector 195 puts in communication.

For example, said through groove 215 defines an S-shaped path for the balls 170.

The deflector 195 can for example be fixed in the seat by means of mounting by interference (hot or cold).

Preferably the recirculating means 175 comprise a plurality of deflectors 195 inserted in specific seats, so as to close in a loop several portions of the outer helical groove 165.

In the third embodiment, the second cylindrical body 155 comprises a central body 220 on which is obtained the outer helical groove 165 and a pair of extremal bodies 225 fixed to the central body 220 at the axial extremities, e.g., by means of threaded connection parts.

In such embodiment, the recirculating means 175 comprise a through channel 235, obtained in the second cylindrical body 155 and adapted to put in communication the extremities of the outer helical thread 165.

In particular a pair of inner helical channels 230, each obtained in a respective extremal body 225 and communicating at one end with the inlet or the outlet of the outer helical groove 165, and a through channel 235 obtained in the central body 220 and adapted to put in communication the extremities of the inner helical channels 230 opposite the extremities in communication with the outer helical groove 165.

The through channel 235 is defined by an open groove, e.g., rectilinear, obtained on a portion of the central body 220 closed by a portion of the stem lateral surface itself.

Each extremal body 225 comprises an annular portion 240 and a jutting-out portion 245, projecting in cantilever fashion from the annular portion 240 and inserted to measure in a corresponding recess 250 obtained in the central body 220.

Each recess 250 is made at an extremal convolution of the outer helical groove 165 and has an angular extension of less than 120° (with reference to an angle having centre on the longitudinal axis of the central body 220).

In practice, the recess 250 interrupts the extremity convolutions of the outer helical groove 165.

Each annular portion 240 has a plurality of through holes, having central axis parallel to the longitudinal axis of the second cylindrical body 155, through which are inserted the threaded connection parts for fixing the extremal body 225 to the central body 220.

Each jutting-out portion 245 comprises a corresponding inner helical channel 230 and a portion of outer thread configured to complete the portion of outer helical thread 165 interrupted by the recess 250.

The three embodiments of the second cylindrical body 155 and of the recirculating means 175 can be applied indistinctly to the different embodiments of the stem 40.

Furthermore, for all three embodiments of the second cylindrical body 155 and of the recirculating means 175, the axial cavity 160 of the second cylindrical body 155 is cylindrical.

For example, and not forming part of the claimed invention, the diameter of such axial cavity 160 can be less than the diameter of the lateral surface of the stem 40.

In this case, the second cylindrical body 155 is fixed by interference, e.g., by shrink-fitting, to the stem 40.

The second cylindrical body 155 comprises an axial slit 260, which lies on a plane containing a symmetry axis of the second cylindrical body 155 and extends from a portion of the second cylindrical body 155 turned towards the first cylindrical body 140 to a portion of the second cylindrical body 155 turned towards the stem 40.

In this case, the second portion 60 of the stem 40 has a smaller diameter than that of the first portion 45 and of the third portion 65, and the axial cavity 160 of the second cylindrical body 155 has a diameter substantially equal by default to the diameter of the second portion 60.

In this embodiment the second cylindrical body 155 is axially locked to the stem 40 by means of a pair of axial shoulders, which are defined by the change in diameter between the second portion 60 and the first portion 45 or the third portion 65.

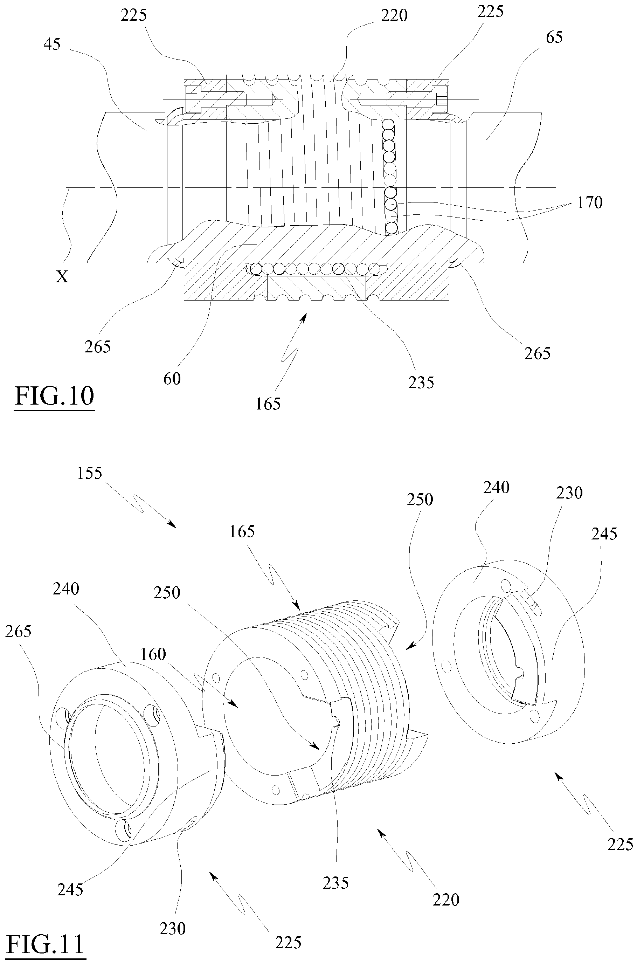

The axial slit 260 allows elastic deformation, in the direction of the widening of the diameter, of the second cylindrical body 155 when the first portion 45 or the third portion 65 of the stem 50 are fitted in the axial cavity 160. Continuing to insert the stem 40, when the second cylindrical body 155 is superimposed on the second portion 60, said second cylindrical body 155 again closes itself embracing the second portion 60 and remains axially locked between the pair of shoulders. According to a not-claimed alternative, the stem 40 can be inserted with reduced play in the axial cavity 160 of the second cylindrical body 155 (see figures 10 and 11). In such case, the second cylindrical body 155 comprises a strip 265 obtained at an axial extremity thereof and adapted to be inserted in a recess obtained in the stem 40.

The strip 265 and the recess can for example be annular, so as to make a fastening by caulking.

Alternatively or in addition, the second cylindrical body 155 can be fixed to the stem by means of threaded parts screwable in specific seats obtained in the stem 40.

Alternatively or in addition, the actuator 10 can comprise a reference pin 270, preferably two reference pins 270, which has an extremity housed in a first seat obtained in the stem 40 and another extremity housed in a second seat obtained in the second cylindrical body 155 (visible in figure 6).

The reference pin 270 allows putting the stem 40 in phase with the second cylindrical body 155 and, in the embodiment of the second cylindrical body 155 wherein the axial slit 260 is present, it prevents the rotation of the second cylindrical body 155 with respect to the stem 40.

The different fixing methods can also be indistinctly applied to the different embodiments of the stem 40.

The second cylindrical body 155 can be made of steel having greater hardness with respect to the steel used to make the stem 40.

Preferably, the cylindrical body is made of 100Cr6.

The actuator 10 also comprises an angular sensor comprising an element 280 fixed to the first cylindrical body 140 and a sensor 285 adapted to read the element 280, housed in a seat obtained in the tubular portion 25 of the casing 20.

The actuator 10 can also comprise a linear sensor (not shown in the drawings) adapted to provide information relating to the axial position of the stem 40 along the sliding axis X.

Finally, the actuator 10, i.e. the casing 20, is at least partially filled with lubricant liquid.

Alternatively or in addition, the recirculating means 175 comprise a grease lubrication system.

The operation of the actuator 10 according to the invention is the following.

When the electric motor 120 is operated, the first cylindrical body 140 is made to rotate around the central axis X and, because the stem 40 cannot rotate as it is hinged to the steering wheels 15, the rotary motion of the first cylindrical body 140 is transformed into a translational motion of the stem 40 along the central axis X.

The stem 40, in its translational motion, pushes one of the two lever mechanisms while it pulls the opposite one, thereby inclining the steering wheels 15 with respect to the direction of forward movement of the vehicle.

During the steering maneuver a check is made of the correct operation of the mechanism by means of the angular sensor and the linear sensor.

Thanks to the second cylindrical body 155 which has an outer diameter greater than that of the openings 50, 70, the stem 40 is prevented from exceeding the maximum project travel which would cause the balls 170 to come out from the recirculating means 175.

In practice, the materials employed, as well as the contingent dimensions and shapes, may be any according to requirements. The scope of protection is defined by the following claims.

## Claims

1. A steering system (1) having an electric linear actuator (10) wherein the actuator comprises:
- a casing (20),
- a stem (40) associated in a sliding way with the casing (20) with respect to a sliding axis (X) and having an extremity which protrudes outwardly from said casing (20),
- an electric motor (120), housed in the casing (20), which has a stator (125) and a rotor (135) axially hollow and coaxial with the stem (40), wherein the rotor (135) can be operated in rotation with respect to an axis of rotation parallel to the sliding axis (X),
- a first cylindrical body (140) axially hollow, which is integral in rotation with the rotor (135) and has an inner thread (150),
- a second cylindrical body (155) axially hollow, fitted on the stem (40) and integrally connected to it, wherein the second cylindrical body (155) is inserted in the first cylindrical body (140) and has an outer helical groove (165) coaxial with the inner thread (150) of the first cylindrical body (140),
- a plurality of balls (170) interposed between the outer helical groove (165) of the second cylindrical body (155) and the inner thread (150) of the first cylindrical body (140) for the coupling of the inner thread (150) to the outer helical groove (165), and
- recirculating means (175) for the recirculation of the balls (170), **characterized in that** the recirculating means (175) is obtained in the second cylindrical body (155) and the second cylindrical body (155) comprises a radial slit (260), which lies on a median plane containing the axis of the second cylindrical body (155) and extends axially along the entire length of the second cylindrical body (155) and radially for the entire radial thickness of the second cylindrical body (155).

2. The steering system (1) according to claim 1, wherein the first cylindrical body (140) and the second cylindrical body (155) are axially contained inside the casing (20), and wherein the casing (20) is closed at one extremity by a head (30,35) having an opening (50,70) wherein the stem (40) is inserted in a sliding way, the head (30, 35) defining an abutting element for the second cylindrical body (155).

3. The steering system (1) according to any one of the preceding claims, wherein the outer helical groove (165) has an inlet (180) and an outlet (185) and extends around the axis of the second cylindrical body (155) according to an angle of less than 360°, and wherein the recirculating means (175) comprise a connection groove (190) which joins to each other the inlet (180) and the outlet (185) of the outer helical groove (165), closing said outer helical groove (165) in a loop around the axis of the second cylindrical body (155).

4. The steering system (1) according to claims 1-2, wherein the outer helical groove (165) extends around the axis of the second cylindrical body (155) according to an angle greater than 360°.

5. The steering system (1) according to claim 4, wherein the recirculating means comprise a deflector (195) which is inserted in a seat obtained in the second cylindrical body (155) and is configured to put in communication with each other an initial portion (200) and an end portion (205) of a convolution of the outer helical groove (165).

6. The steering system (1) according to claim 4, wherein the second cylindrical body (155) comprises a central body (220) on which is obtained the outer helical groove (165) and a pair of extremal bodies (225) fixed to the central body (220), and wherein the recirculating means (175) comprise a pair of inner helical channels (230), each obtained in a respective extremal body (225) and communicating at one extremity with the outer helical groove (165), and a through channel (235) obtained in the central body (220) and adapted to put in communication the inner helical channels (230).

7. The steering system (1) according to claim 6, wherein the through channel (235) is delimited by an open groove obtained on a portion of the central body (220) closed by a portion of the stem (40) lateral surface.

8. The steering system (1) according to any one of the claims from 1 to 7,
wherein the stem (40) comprises a reference pin (270) which can be housed at least partially in a corresponding seat obtained in the second cylindrical body (155).

9. The steering system (1) according to claim 1, which comprises a steering axle (A) mechanically connected to the extremity of the stem (40).

## Patentansprüche

1. Lenksystem (1), das einen elektrischen linearen Stellantrieb (10) aufweist, wobei der Stellantrieb Folgendes umfasst:
- ein Gehäuse (20),
- einen Schaft (40), der auf gleitende Weise in Bezug auf eine Gleitachse (X) mit dem Gehäuse (20) assoziiert ist und ein Ende aufweist, das aus dem Gehäuse (20) nach außen hervorsteht,
- einen Elektromotor (120), der in dem Gehäuse (20) untergebracht ist, der einen Stator (125) und einen Rotor (135) aufweist, die axial hohl und koaxial zu dem Schaft (40) sind, wobei der Rotor (135) in Bezug auf eine Drehachse parallel zu der Gleitachse (X) drehbar betrieben werden kann,
- einen axial hohlen ersten zylindrischen Körper (140), der in Drehung mit dem Rotor (135) integral ist und ein Innengewinde (150) aufweist,
- einen axial hohlen zweiten zylindrischen Körper (155), der auf den Schaft (40) aufgesetzt und integral damit verbunden ist, wobei der zweite zylindrische Körper (155) in den ersten zylindrischen Körper (140) eingesetzt ist und eine äußere schraubenförmige Nut (165) aufweist, die koaxial zu dem Innengewinde (150) des ersten zylindrischen Körpers (140) verläuft,
- eine Vielzahl von Kugeln (170), die zum Koppeln des Innengewindes (150) mit der äußeren schraubenförmigen Nut (165) zwischen der äußeren schraubenförmigen Nut (165) des zweiten zylindrischen Körpers (155) und dem Innengewinde (150) des ersten zylindrischen Körpers (140) angeordnet sind, und
- Umlaufmittel (175) zum Umlauf der Kugeln (170),
**dadurch gekennzeichnet, dass** das Umlaufmittel (175) in dem zweiten zylindrischen Körper (155) erlangt und der zweite zylindrische Körper (155) einen radialen Schlitz (260) umfasst, der auf einer Mittelebene liegt, die die Achse des zweiten zylindrischen Körpers (155) beinhält und sich axial über die gesamte Länge des zweiten zylindrischen Körpers (155) und radial für die gesamte radiale Stärke des zweiten zylindrischen Körpers (155) erstreckt.

2. Lenksystem (1) nach Anspruch 1, wobei der erste zylindrische Körper (140) und der zweite zylindrische Körper (155) axial in dem Inneren des Gehäuses (20) enthalten sind, und wobei das Gehäuse (20) an einem Ende durch einen Kopf (30, 35) geschlossen ist, der eine Öffnung (50, 70) aufweist, wobei der Schaft (40) auf gleitende Weise eingefügt ist, wobei der Kopf (30, 35) ein Anschlagelement für den zweiten zylindrischen Körper (155) definiert.

3. Lenksystem (1) nach einem der vorstehenden Ansprüche, wobei die äußere schraubenförmige Nut (165) einen Einlass (180) und einen Auslass (185) aufweist und sich um die Achse des zweiten zylindrischen Körpers (155) gemäß einem Winkel von weniger als 360° erstreckt, und wobei die Umlaufmittel (175) eine Verbindungsnut (190) aufweisen, die den Einlass (180) und den Auslass (185) der äußeren schraubenförmige Nut (165) miteinander verbindet, wobei sie die äußere schraubenförmige Nut (165) in einer Schleife um die Achse des zweiten zylindrischen Körpers (155) schließt.

4. Lenksystem (1) nach Anspruch 1-2, wobei sich die äußere schraubenförmige Nut (165) um die Achse des zweiten zylindrischen Körpers (155) gemäß einem Winkel größer als 360° erstreckt.

5. Lenksystem (1) nach Anspruch 4, wobei die Umlaufmittel einen Deflektor (195) umfassen, der in einen in dem zweiten zylindrischen Körper (155) erlangten Sitz eingesetzt und konfiguriert ist, um einen anfänglichen Abschnitt (200) und einen Endabschnitt (205) einer Windung der äußeren schraubenförmigen Nut (165) miteinander in Verbindung zu bringen.

6. Lenksystem (1) nach Anspruch 4, wobei der zweite zylindrische Körper (155) einen mittleren Körper (220) umfasst, an dem die äußere schraubenförmige Nut (165) und ein Paar extremaler Körper (225), die an dem mittleren Körper (220) befestigt sind, erlangt sind, und wobei die Umlaufmittel (175) ein Paar innerer schraubenförmiger Kanäle (230) umfassen, die jeweils in einem jeweiligen extremalen Körper (225) erlangt werden und an einem Ende mit der äußeren schraubenförmigen Nut (165) verbunden sind, und einen Durchgangskanal (235), der in dem mittleren Körper (220) erlangt und angepasst ist, um die inneren schraubenförmigen Kanäle in Verbindung zu bringen.

7. Lenksystem (1) nach Anspruch 6, wobei der Durchgangskanal (235) durch eine offene Nut begrenzt ist, die an einem Abschnitt des mittleren Körpers (220) erlangt wird, der durch einen Abschnitt der Seitenfläche des Schafts (40) geschlossen ist.

8. Lenksystem (1) nach einem der Ansprüche von 1 bis 7, wobei der Schaft (40) einen Referenzstift (270) umfasst, der zumindest teilweise in einem entsprechenden Sitz untergebracht werden kann, der in dem zweiten zylindrischen Körper (155) erlangt wird.

9. Lenksystem (1) nach Anspruch 1, das eine Lenkachse (A) umfasst, die mechanisch mit dem Ende des Schafts (40) verbunden ist.

## Revendications

1. Système de direction (1) doté d'un actionneur linéaire électrique (10) dans lequel l'actionneur comprend :
- un carter (20),
- une tige (40) associée de manière coulissante au carter (20) par rapport à un axe de coulissement (X) et disposant d'une extrémité faisant saillie à l'extérieur dudit carter (20),
- un moteur électrique (120), logé dans le carter (20), qui possède un stator (125) et un rotor (135) axialement creux et coaxiaux à la tige (40), dans lequel le rotor (135) peut être actionné en rotation par rapport à un axe de rotation parallèle à l'axe de coulissement (X),
- un premier corps cylindrique (140) axialement creux, qui est intégral en rotation avec le rotor (135) et possède un filetage intérieur (150),
- un second corps cylindrique (155) axialement creux, fixé sur la tige (40) et intégralement connecté à cette dernière, dans lequel le second corps cylindrique (155) est inséré dans le premier corps cylindrique (140) et possède une rainure hélicoïdale extérieure (165) coaxiale au filetage intérieur (150) du premier corps cylindrique (140),
- une pluralité de billes (170) interposées entre la rainure hélicoïdale extérieure (165) du second corps cylindrique (155) et le filetage intérieur (150) du premier corps cylindrique (140) pour le couplage du filetage intérieur (150) sur la rainure hélicoïdale extérieure (165), et
- des moyens de recirculation (175) pour la recirculation des billes (170), **caractérisé en ce que** les moyens de recirculation (175) sont obtenus dans le second corps cylindrique (155) et le second corps cylindrique (155) comprend une fente radiale (260), qui repose sur un plan médian contenant l'axe du second corps cylindrique (155) et s'étend axialement sur toute la longueur du second corps cylindrique (155) et radialement pour toute l'épaisseur radiale du second corps cylindrique (155).

2. Système de direction (1) selon la revendication 1, dans lequel le premier corps cylindrique (140) et le second corps cylindrique (155) sont axialement contenus à l'intérieur du carter (20) et dans lequel le carter (20) est fermé à une extrémité par une tête (30, 35) possédant une ouverture (50, 70) dans laquelle la tige (40) est insérée de manière coulissante, la tête (30, 35) définissant un élément de butée pour le second corps cylindrique (155).

3. Système de direction (1) selon l'une quelconque des revendications précédentes, dans lequel la rainure hélicoïdale extérieure (165) possède une entrée (180) et une sortie (185) et s'étend autour de l'axe du second corps cylindrique (155) selon un angle inférieur à 360° et dans lequel les moyens de recirculation (175) comprennent une rainure de connexion (190) qui relie l'entrée (180) et la sortie (185) de la rainure hélicoïdale extérieure (165) entre elles, fermant ladite rainure hélicoïdale extérieure (165) dans une boucle autour de l'axe du second corps cylindrique (155).

4. Système de direction (1) selon les revendications 1 à 2, dans lequel la rainure hélicoïdale extérieure (165) s'étend autour de l'axe du second corps cylindrique (155) selon un angle supérieur à 360°.

5. Système de direction (1) selon la revendication 4, dans lequel les moyens de recirculation comprennent un déflecteur (195) qui est inséré dans un siège obtenu dans le second corps cylindrique (155) et est configuré pour mettre en communication une partie initiale (200) et une partie finale (205) d'une circonvolution de la rainure hélicoïdale extérieure (165).

6. Système de direction (1) selon la revendication 4, dans lequel le second corps cylindrique (155) comprend un corps central (220) sur lequel est obtenue la rainure hélicoïdale extérieure (165) et une paire de corps extrêmes (225) fixée au corps central (220) et dans lequel les moyens de recirculation (175) comprennent une paire de canaux hélicoïdaux intérieurs (230), chacun obtenu dans un corps extrême (225) respectif et communiquant au niveau d'une extrémité avec la rainure hélicoïdale extérieure (165) et un canal traversant (235) obtenu dans le corps central (220) et apte à mettre en communication les canaux hélicoïdaux intérieurs (230).

7. Système de direction (1) selon la revendication 6, dans lequel le canal traversant (235) est délimité par une rainure ouverte obtenue sur une partie du corps central (220) fermée par une partie de la surface latérale de la tige (40).

8. Système de direction (1) selon l'une quelconque des revendications 1 à 7, dans lequel la tige (40) comprend une broche de référence (270) qui peut être logée au moins partiellement dans un siège correspondant obtenu dans le second corps cylindrique (155).

9. Système de direction (1) selon la revendication 1, qui comprend un essieu de direction (A) mécaniquement connecté à l'extrémité de la tige (40).
